# EUROPEAN PATENT SPECIFICATION

(11) **EP 1 892 825 B1**
(45) Date of publication and mention of the grant of the patent: **23.01.2013**
(21) Application number: 07021507.4
(22) Date of filing: 04.09.2006
(51) Int. Cl.: H02P 7/00, G05B 9/03, H02J 9/06

(54) **Redundant motor driving circuit**
Redundante Motorantriebsschaltung
Circuit de commande redondant de moteur

(30) Priority: 06.09.2005 JP 2005257645; 22.09.2005 JP 2005275611; 22.09.2005 JP 2005275612
(43) Date of publication of application: 27.02.2008
(62) Divisional of application: 06254589.2
(73) Proprietor: Honda elesys Co., Ltd., Yokohama-shi, Kanagawa 240-0005 (JP); HONDA MOTOR CO., LTD., Tokyo 107-8556 (JP)
(72) Inventor: Kubo, Shinji, Yokohama-shi Kanagawa, 240-0005 (JP); Iwagami, Naoki, Yokohama-shi Kanagawa, 240-0005 (JP); Nojiri, Yoshikazu, Wako-shi Saitama, 351-0193 (JP)
(74) Representative: Forrester, Simon Joseph

(56) References cited:
- EP-A- 1 542 352
- DE-A1- 10 122 954
- JP-A- 2004 064 866
- US-A1- 2002 057 070
- ANONYMOUS: "Redundant power moding control of a vehicle" RESEARCH DISCLOSURE, MASON PUBLICATIONS, HAMPSHIRE, GB, vol. 464, no. 5, December 2002 (2002-12), XP007131781 ISSN: 0374-4353

## Description

### BACKGROUND OF THE INVENTION

### Field of the Invention

The present invention relates to a redundant power supply circuit of a vehicle electronic control system, which must have a redundant structure, and a motor driving circuit having a redundant structure, employed in a computer unit of such a vehicle electronic control system, or the like.

Priority is claimed on Japanese Patent Applications No. 2005-257645, filed September 6, 2005, No. 2005-275611, filed September 22, 2005, and No. 2005-275612, filed September 22, 2005, the contents of which are incorporated herein by reference.

### Description of the Related Art

In a known (motor) vehicle electronic control system, the power supply circuit of its computer unit has a redundant structure, so that even when one of power supply circuits is in an abnormal state, the system can be normally operated using the other power supply circuit (see, for example, Non-Patent Document 1).

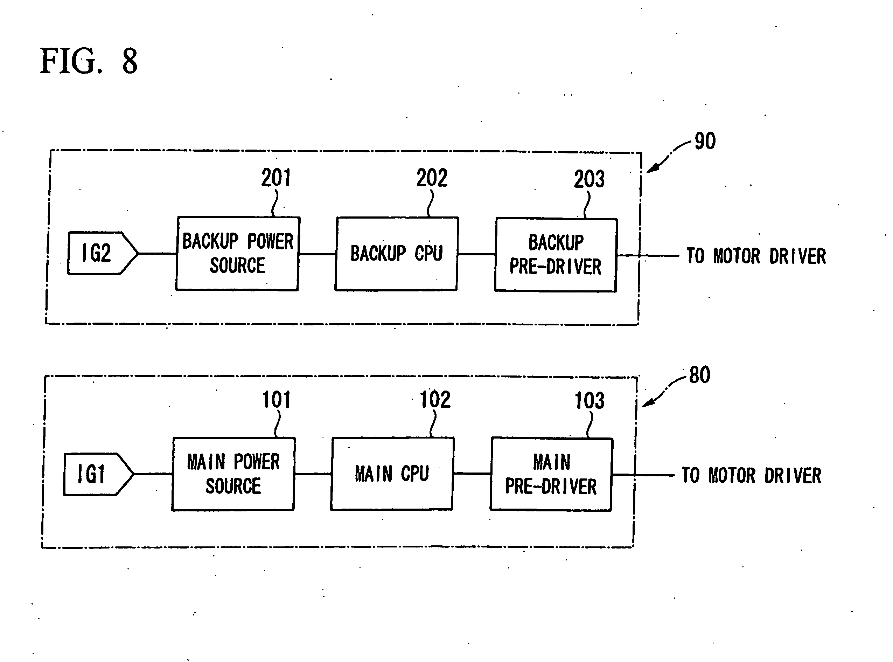

Fig. 8 is a block diagram showing a conventional redundant power supply circuit used in a computer unit of such a vehicle electronic control system. In Fig. 8, the redundant power supply circuit consists of a main circuit 80 using an IG1 signal as a primary source signal, and a backup circuit 90 using an IG2 signal as a primary source signal. The above "IG1 signal" is a signal which is set to "High" (i.e., a high-level state) while an IG (ignition) switch, operated by the driver of the vehicle, is ON (i.e., in the on-state), and the above "IG2 signal" is a signal which is set to High while the engine of the vehicle is activated and operated.

The main circuit 80 includes a main power source 101 which receives the IG1 signal as the primary source signal, a main CPU (central processing unit) 102 for performing main control of the main circuit 80, and a main pre-driver 103 for performing signal amplification before the signal is input into a motor driver.

The backup circuit 90 has a similar structure, so that power is supplied from both the main circuit 80 and the backup circuit 90 via corresponding motor drivers to the motor.

The main circuit 80 and the backup circuit 90 do not interfere with each other, and each independently operates. When one of the two is out of order, power is supplied from the other circuit to the motor. For example, when the main circuit 80 is out of order (or not functioning) due to breakage in a wiring harness for the IG1 signal, power is supplied from the motor driver connected to the backup circuit 90.

However, the IG2 signal is interrupted during cranking, or disconnected when the driver of the vehicle sets the IG switch to a START position. Therefore, when the IG2 signal is disconnected, the backup circuit 90 does not operate.

Therefore, in the above conventional redundant power supply circuit, the activation or operation state of the backup circuit changes in accordance with the operation of the IG switch by the driver; thus, when the main circuit determines a failure in the backup circuit, the main circuit should perform such failure determination after confirming that the backup circuit is now operating.

However, the main circuit and the backup circuit each independently operate; thus, the main circuit cannot detect the activation or operation state of the backup circuit, and it is difficult to set appropriate timing for performing a determination with respect to the backup circuit.

In addition, the main circuit stops its operation when the IG switch is set to OFF (i.e., the off-state). Therefore, it is impossible to detect a failure in which the backup circuit continuously operates even after the IG switch is set to OFF, and to issue a warning. In such a failure, the battery source of the vehicle is continuously consumed.

On the other hand, when such a redundant power supply circuit for the vehicle electronic control system is considered as a motor driving circuit and thus the motor driving circuit for the computer unit has a redundant structure, it is known that if one of the motor driving circuits is out of order, the other can operate the motor normally (see Non-Patent Document 1, similarly).

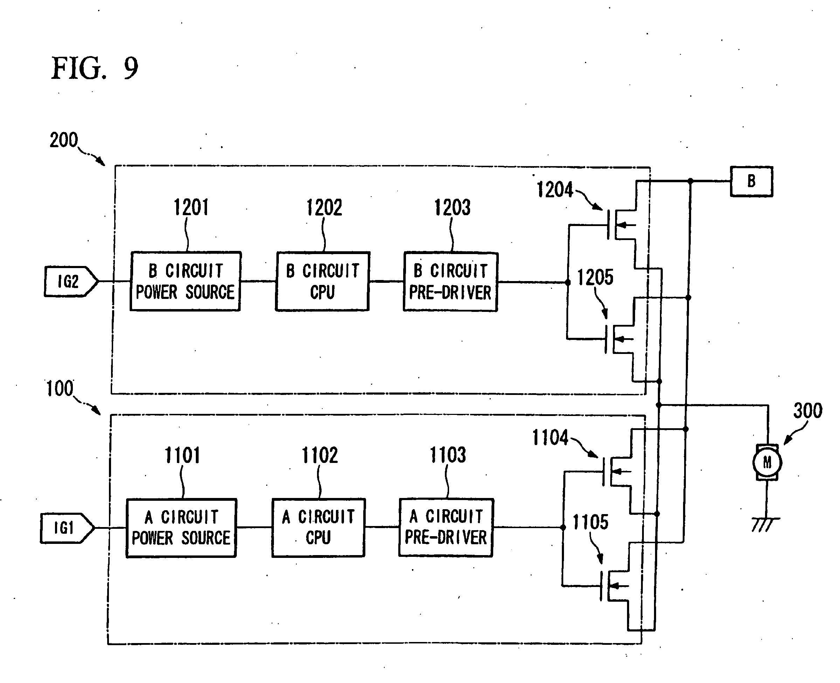

Fig. 9 is a block diagram showing a known motor driving circuit employing a complete parallel redundant structure.

In Fig. 9, the motor driving circuit consists of an A circuit 100 using the IG1 signal as the primary source signal, and a B circuit 200 using the IG2 signal as the primary source signal.

The A circuit 100, which is one circuit in the complete parallel redundant structure, includes an A circuit power source 1101 which receives the IG1 signal as the primary source signal, an A circuit CPU 1102 for performing main control of the A circuit, an A circuit pre-driver 1103 for performing signal amplification before the signal is input into a motor driver, and parallel FETs (field effect transistors) 1104 and 1105 for driving the motor 300. The B circuit 200, which is the other circuit in the complete parallel redundant structure, has a similar structure, and the motor 300 is energized (or powered) by both the A circuit 100 and the B circuit 200.

The A circuit 100 and the B circuit 200 each independently operate, and check (the status of) each other. When one circuit determines that the other is in an abnormal state, it is necessary to stop signal output from the other circuit. More specifically, if the A circuit CPU 1102 monitors the B circuit CPU 2102 and determines that the operation function of the B circuit CPU 2102 is out of order, then the A circuit CPU 1102 executes a process of stopping signal output from the B circuit pre-driver 1203 to the FETs 1204 and 1205.

However, in the above conventional motor driving circuit having the completely parallel redundant structure, the A and B circuits each should have a function of checking the other circuit, and each performs all required (arithmetic) operations for control.

Therefore, each circuit in the redundant structure should have a CPU of high performance for checking the other circuit and executing various operations for control.

As discussed above, the A circuit 100 and the B circuit 200 do not interfere with each other and each independently operates. In a normally operating state, four FETs (i.e., the FET 1104, FET 1105, FET 1204, and FET 1205) function as the final-stage FETs for driving the motor 300, and when any one of the four FETs is out of order, the motor 300 is energized using the remaining FETs.

However, the above conventional motor driving circuit has the completely parallel redundant structure which requires two FETs for each circuit of this structure (i.e., four FETs totally) as the final-stage FETs, thereby increasing the cost. In addition, in this conventional structure, the motor can be driven until all the four FETs become out of order, and thus no determination with respect to the FETs is performed.

Therefore, it is impossible to detect a failure in which the FETs are not turned off even when the circuit becomes out of order and the FETs should be turned off, and thus the battery source is continuously consumed and the motor is continuously energized (which finally causes battery to die). Non-Patent Document 1: Hiroshi Shiomi, "Shinraisei Kougau Nyumon" (which means "Introduction to Reliability Engineering"), third revised edition, Maruzen Co., Ltd., pp. 106-120, November 20, 1982.

US 2002/057070 discloses an electrical steering system for a vehicle including an electrically supplied steering motor arrangement which is connected with an inverter arrangement, whose output voltage is influenced by a computer arrangement, and a sensor arrangement. To reduce the cost of the steering system while also allowing the steering system to be steerable during braking in the case of a fault, the steering motor arrangement has a redundant steering motor which is connected with the computer arrangement via two separately run control circuits. The control circuits have separate electric supplies and the computer arrangement is redundant.

JP 2004 064866 discloses a motor drive controller wherein a motor is controlled by a stand-by control unit instead of a main control unit by a switching control circuit with a dual port memory having data shared and accessed by the main control unit and the stand-by control unit which controls the motor. The data used in the main control unit is smoothly replaced to be used by the stand-by control unit by the memory, and the respective control units are cassetted to be attachable to and detachable from an inverter unit body.

### SUMMARY OF THE INVENTION

In light of the above circumstances, it is an object to provide a redundant power supply circuit which can always reliably monitor the state of a backup circuit, a motor driving circuit which can have a redundant structure without providing a plurality of CPUs having high performance, and a motor driving circuit which can be realized at low cost and has high reliability.

Therefore, the present invention provides a motor driving circuit comprising:
a main driving circuit (e.g., a main CPU 2 and a main pre-driver 3 in a second embodiment explained later) for outputting a driving signal for driving a motor;
a main monitoring circuit (e.g., a monitoring IC 1 in the second embodiment) for determining a failure in the main driving circuit and outputting an abnormal state signal when determining that there is a failure in the main driving circuit;
a backup driving circuit (e.g., a backup CPU 4 and a backup pre-driver 5 in the second embodiment) for outputting a driving signal for driving the motor when receiving the abnormal state signal; and
a switching circuit (e.g., a switching circuit 7 in the second embodiment) for selecting one of the main driving circuit and the backup driving circuit based on the abnormal state signal, and outputting the driving signal, which is output from the selected driving circuit, to the motor; wherein the main driving circuit has
a CPU for performing determinations with respect to both the main monitoring circuit and a backup CPU that forms part of the backup driving circuit, and wherein the main driving circuit further has a determination device for determining whether the motor is normally energized;
when the backup driving circuit does not receive the abnormal signal, the backup driving circuit operates based on an operation designating signal input from the main driving circuit; and
the backup CPU does not perform operations other than the operation necessary for driving the motor, or determination with respect to the main driving circuit.

The above motor driving circuit has a switching-type redundant structure using the switching circuit; thus, the backup driving circuit does not need to have all the functions as executed by the main driving circuit, and can only execute those operations at least necessary for driving the motor. Therefore, only the main driving circuit needs a CPU of high performance, and thus a plurality of such CPUs of high performance is unnecessary, which is necessary in the known complete parallel redundant structure.

The main driving circuit may output an operation designating signal (e.g., a MOT_req signal in the second embodiment) for designating an operation of the backup driving circuit; and
the backup driving circuit receives the operation designating signal and operates based on this operation designating signal.

In this case, the motor can be driven using the driving signal output from the backup driving circuit, in accordance with a designation from the main driving circuit, and the main driving circuit can perform a determination with respect to the backup driving circuit.

In a preferable example, the motor driving circuit has a plurality of signal lines (e.g., signal lines between inh1 and inh2 terminals and the backup CPU 4 in the second embodiment) for outputting the abnormal state signal from the main monitoring circuit to the backup driving circuit.

In this case, even when a failure occurs in some of the signal lines for outputting the abnormal state signal, the main monitoring circuit can output the abnormal state signal normally to the backup driving circuit. Therefore, tolerance for failure in the signal lines can be improved.

In another preferable example, the switching circuit selects one of the main driving circuit and the backup driving circuit based on a logical OR of the abnormal state signal and a switching signal (e.g., a signal output from an inh5 terminal in the second embodiment) supplied from the main driving circuit.

In this case, the switching of the driving circuit via the switching circuit can be performed by using either of the abnormal state signal output from the main monitoring circuit and the switching signal output from the main driving circuit. Therefore, the motor driving circuit can be switched even when the main driving circuit operates normally.

In another preferable example, the motor driving circuit further comprises: a main power supply voltage-drop detecting device (e.g., a VCCA drop detection circuit 14 in the second embodiment) for detecting a voltage drop in a power supply of the main driving circuit, wherein
the switching circuit forcibly selects the backup driving circuit when the voltage drop is detected by the main power supply voltage-drop detecting device.

In this case, when a voltage drop in the power supply of the main driving circuit is detected, the driving circuit is switched to the backup driving circuit. Therefore, it is possible to prevent the main driving circuit from continuously driving the motor with a dropped power supply voltage. Accordingly, even when a failure occurs in which the power supply voltage of the main driving circuit has dropped, the motor can be driven normally using the backup driving circuit.

In another preferable example, the motor driving circuit further comprises: a backup power supply voltage-drop detecting device (e.g., a VCCB drop detection circuit 15 in the second embodiment)for detecting a voltage drop in a power supply of the backup driving circuit, wherein
the switching circuit forcibly selects the main driving circuit when the voltage drop is detected by the backup power supply voltage-drop detecting device.

In this case, when a voltage drop in the power supply of the backup driving circuit is detected, the driving circuit is switched to the main driving circuit. Therefore, it is possible to prevent the backup driving circuit from continuously driving the motor with a dropped power supply voltage. Accordingly, even when a failure occurs in which the power supply voltage of the backup driving circuit has dropped, the motor can be driven normally using the main driving circuit.

In another preferable example, the switching circuit receives the abnormal state signal (e.g., a signal input into a BKUP_ENB_FB terminal in the second embodiment) and outputs the received abnormal state signal to the main driving circuit.

In this case, the main driving circuit can monitor the state of the abnormal state signal which was input from the main monitoring circuit to the switching circuit, so as to determine whether the abnormal state signal itself is normal. Therefore, when a failure occurs in the main driving circuit, the abnormal state signal can be reliably output from the main monitoring circuit.

In another preferable example, the motor driving circuit further comprises:
an odd number of three or more determination devices, each for determining whether the motor is energized, wherein
whether the main driving circuit or the backup driving circuit drives the motor normally is determined based on a result of a determination obtained by a larger number of the determination devices.

In this case, three determination devices are provided for determining whether the motor is energized; thus, it is possible to compare the number of determination devices having the determination result that "the motor is energized" with the number of determination terminals having the determination result that "the motor is not energized", and adopt the determination result obtained by the larger number of determination devices. Therefore, even when some of the determination devices are not functioning, it is possible to accurately determine whether the motor is energized. Accordingly, a further reliable determination is possible, and it is possible to improve tolerance for a system down (in which the motor driving function is stopped) when a failure occurs in the determination devices (that is, a system down does not immediately occur even when a failure occurs in the determination devices).

If a single determination device is provided, the result obtained by this determination device cannot but be believed regardless of whether the result itself is normal or abnormal. Also in this case, if the result of the determination cannot be detected electrically, the system down (in which the motor driving function is stopped) is inevitable.

If two (or an even number of three or more) determination devices are provided, when the results of the determination do not coincide with each other, it is impossible to determine which result should be believed. Therefore, although one of the results is normal, the system down is inevitable also in this case.

There may be provided a redundant power supply circuit which is used in a vehicle electronic control system and has a main circuit and a backup circuit, wherein:
the main circuit uses a battery source as its primary source and has a control signal output device (e.g., a CPU "IC1" in a first embodiment explained later) for outputting a control signal (e.g., a forced activation signal in the first embodiment) to the backup circuit; and
the backup circuit uses a battery source as its primary source and has an activation device (e.g., a power supply IC "IC4" in the first embodiment) for activating the backup circuit when the control signal is input into the backup circuit.

In the above structure, the battery sources are used as the primary sources, and the main circuit has a device for activating the backup circuit. Therefore, the main circuit can reliably activate the backup circuit, and then start a determination with respect to the backup circuit, regardless of the states of the IG1 and IG2 signals.

Accordingly, the main circuit can always perform a reliable determination with respect to the backup circuit, without confirming that the backup circuit has been activated.

Preferably, the main circuit further includes a self-holding device (refer to a function relating to IC1 and IC3 through a self-holding signal in the first embodiment) for holding an activated state of the main circuit.

In this case, even after the IG switch is turned off and the IG1 and IG2 signals are set to the low-level state, the activated state of the main circuit can be maintained, and thus a determination with respect to the backup circuit can be performed even after the IG switch is turned off. Therefore, the main circuit can reliably determine a failure of the backup circuit, which occurs after the IG switch is turned off.

In a typical example, the above redundant power supply circuit is installed in a vehicle, wherein:
the main circuit is activated based on a logical OR of three logical values of a first IG signal, a second IG signal, and a self-holding signal, wherein the first IG signal is in an on-state when an ignition switch of an internal combustion engine of the vehicle is in an on-state, the second IG signal is in an on-state when the internal combustion engine is operating, and the self-holding signal is in an on-state while the activated state is held by the self-holding device.

In accordance with the above structure, the main circuit and the backup circuit each is activated based on a logical OR of three logical values of the relevant signals. Therefore, even when a failure occurs in routes of two or less among the three signals, the main circuit and the backup circuit each can be activated normally. Accordingly, in comparison with the conventional redundant power supply circuit activated based only on the IG1 or IG2 signal, tolerance for failure can be improved.

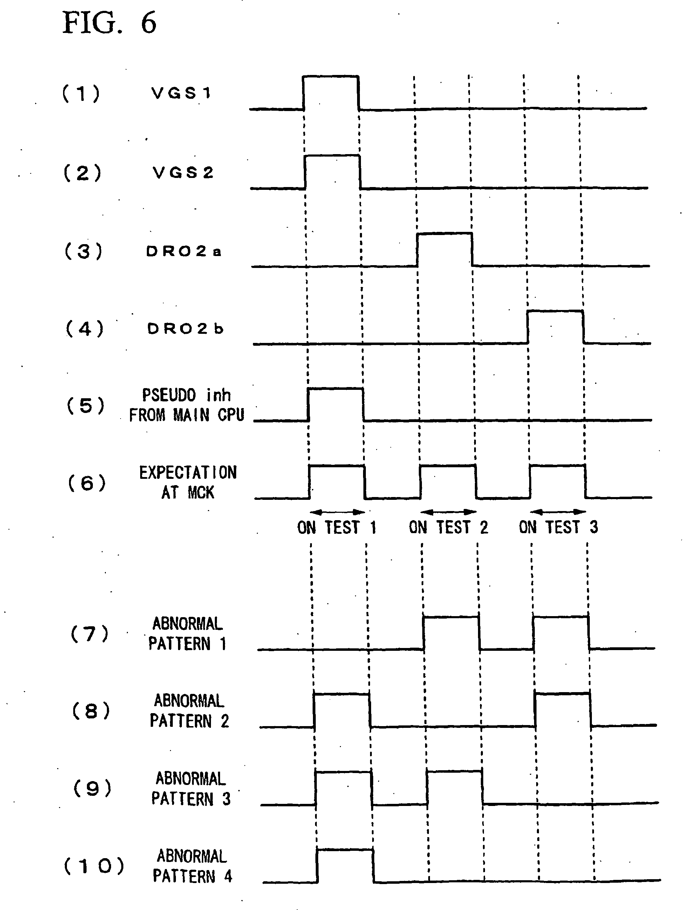

There may also be provided a motor driving circuit comprising:
a driving device (e.g., FETs 37 and 38 in a third embodiment explained later) for receiving a driving signal (e.g., signals input into the gates of the FETs 37 and 38 in the second embodiment) and driving a motor based on the driving signal;
a first control circuit (e.g., a main CPU 32 and a main pre-driver 33 in the second embodiment) for outputting the driving signal;
a second control circuit (e.g., a backup CPU 34 and a backup pre-driver 35 in the second embodiment) for outputting the driving signal;
a switching device (e.g., switches Pri1-1, Pri1-2, Pri2-1, and Pri2-2 in the second embodiment) for selecting one of the first control circuit and the second control circuit so as to output the driving signal to the driving device;
an energization determining device (e.g., the main CPU 32 in the second embodiment) for determining whether the motor is energized; and
a motor driving control circuit selecting device (refer to the determination operation of the main CPU 32, shown in Fig. 6 in the second embodiment) for energizing the motor through the first control circuit and the second control circuit when the motor is driven, wherein if the energization determining device determines that the above energization is not performed through one of the first control circuit and the second control circuit, the motor driving control circuit selecting device makes the switching device select the other control circuit.

In accordance with the above structure, among the first and second control circuits, one most suitable for driving the motor is always selected as the control circuit for inputting the driving signal into the driving device, thereby reliably driving the motor. Therefore, it is possible to provide a motor driving circuit having high reliability at low cost, without employing a driving device having a redundant structure as employed in the conventional circuits.

In a typical example, the above energization by the motor driving control circuit selecting device through the first control circuit and the second control circuit is performed in a manner such that timings of outputting the driving signals from both control circuits are offset from each other.

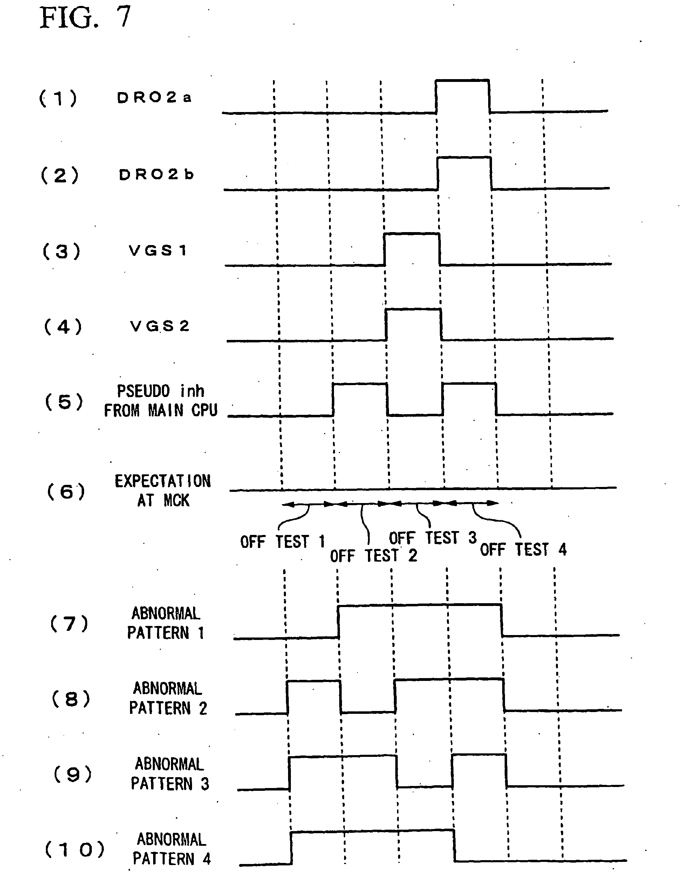

The motor driving circuit may further comprise:
a motor stopping control circuit selecting device (refer to the determination operation of the main CPU 32, shown in Fig. 7 in the second embodiment) for checking motor stopping functions of the first control circuit and the second control circuit, and making the switching device select any one of the control circuits, wherein the energization determining device determines that energization of the motor is stopped normally by said any one of the control circuits.

In this case, when the motor is stopped, the optimal control circuit can be selected from among the first and second control circuits, thereby reliably stopping the energization of the motor. Therefore, it is possible to prevent the motor from being continuously energized even when the motor is stopped, thereby further improving the reliability.

Also in this case, typically, the above checking by the motor driving control circuit selecting device is performed in a manner such that timings of checking the respective motor stopping functions of the first control circuit and the second control circuit are offset from each other.

### BRIEF DESCRIPTION OF THE DRAWINGS

Fig. 1 is a block diagram showing the structure of the redundant power supply circuit as a first embodiment in accordance with the present invention.
Fig. 2 is a block diagram showing the structure of the motor driving circuit as a second embodiment in accordance with the present invention.
Fig. 3 is a diagram showing the structure of the switching circuit 7 in Fig. 2.
Fig. 4 is a diagram showing an example of the structure of the VCCA drop detection circuit 14 and the VCCB drop detection circuit 15 in Fig. 3.
Fig. 5 is a block diagram showing the structure of the motor driving circuit as a third embodiment in accordance with the present invention.
Fig. 6 is a timing chart of a test performed when the driving control of the motor is started, so as to determine whether the motor can be energized.
Fig. 7 is a timing chart of a test performed when the driving of the motor is stopped, so as to determine whether the energization of the motor is stopped.
Fig. 8 is a block diagram showing the structure of a conventional redundant power supply circuit.
Fig. 9 is a block diagram showing the structure of a conventional motor driving circuit employing a complete parallel redundant structure.

### DETAILED DESCRIPTION OF THE INVENTION

Hereinafter, embodiments in accordance with the present invention will be described with reference to the appended figures.

### First Embodiment

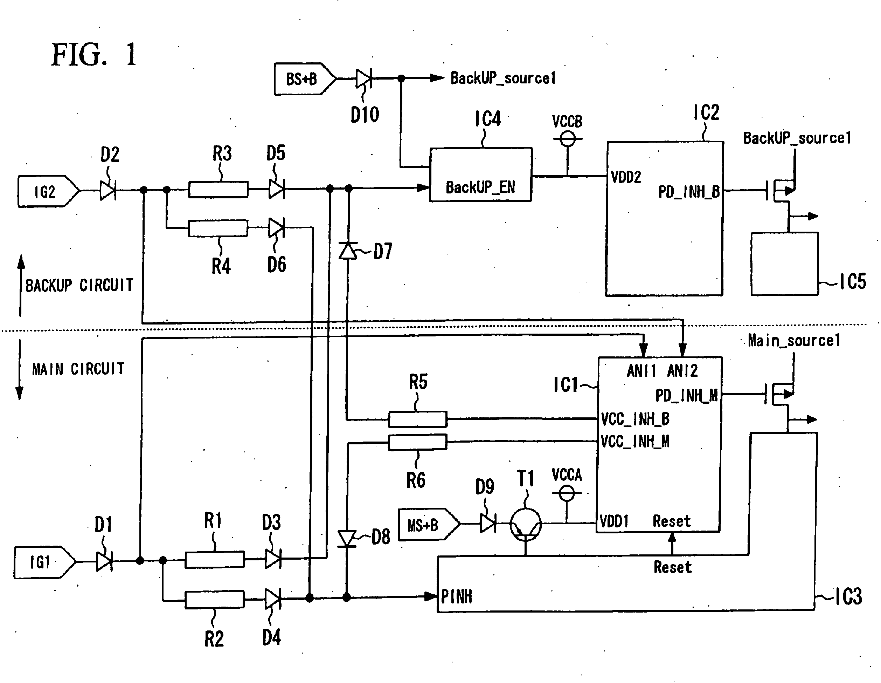

A redundant power supply circuit of a (motor) vehicle electronic control system, as a first embodiment of the present invention, will be explained with reference to Fig. 1.

Fig. 1 is a block diagram showing the structure of the redundant power supply circuit of the first embodiment.

In Fig. 1, reference symbol IC1 indicates a CPU which controls the operation of a main circuit and whose primary source is a battery source "MS+B". Reference symbol IC2 indicates a CPU which controls the operation of a backup circuit and whose primary source is a similar battery source "BS+B".

Reference symbol IC3 indicates a power supply IC (integrated circuit) of the main circuit, which also functions as a pre-driver. Reference symbol IC4 indicates a power supply IC of the backup circuit, and reference symbol IC5 indicates a pre-driver IC of the backup circuit. Reference symbols D9 and D10 are protect diodes for preventing application of negative voltages which appear at each power supply terminal. The operations of IC3 and IC5 as pre-drivers are similar to those in the conventional circuit, and explanations thereof are omitted.

Below, an electrical connection (relationship) between the IG1 and IG2 signals and the redundant power supply circuit shown in Fig. 1 is described, where the IG1 and IG2 signals are issued by IG (ignition) switch switching operations of the driver of the vehicle,. As discussed above, the IG1 signal is set to High while the IG switch is ON, and the IG2 signal is set to High while the engine of the vehicle is activated and operated.

The IG1 signal is split via the protect diode D1 into three portions: one is input into an ANI1 terminal of IC1, a second is connected via a resistor R1 and a diode D3 to a BackUP_EN terminal of IC4, and a third is connected via a resistor R2 and a diode D4 to a PINH terminal of IC3.

IC1 monitors a signal input into the ANI1 terminal so as to check whether the IG1 signal is High or "Low" (i.e., in the low-level state). When the BackUP_EN terminal is High, IC4 raises a backup power supply voltage VCCB so as to supply power to a power supply terminal VDD2 of IC2.

When the PINH terminal is High, IC3 raises a main power supply voltage VCCA via a transistor T1, so as to supply power to a power supply terminal VDD1 of IC1. The above resistor R1 controls an electric current flowing through the diode D3, and similarly, resistors R2 to R6 respectively control electric currents flowing through the diodes D4 to D8.

On the other hand, the IG2 signal is split via the protect diode D2 into three portions: one is input into an ANI2 terminal of IC1, a second is connected via a resistor R3 and a diode D5 to the BackUP_EN terminal of IC4, and a third is connected via a resistor R4 and a diode D6 to the PINH terminal of IC3.

IC1 monitors a signal input into the ANI2 terminal so as to check whether the IG2 signal is High or Low. The BackUP_EN terminal of IC4 and the PINH terminal of IC 3 operate as discussed above.

In addition, a VCC_INH_B terminal of IC1 is connected via the resistor R5 and the diode D7 to the BackUP_EN terminal of IC4, and a VCC_INH_M terminal of IC1 is connected via the resistor R6 and the diode D8 to the PINH terminal of IC3.

When setting the VCC_INH_B terminal to High, IC1 can activate IC4 so as to activate IC2, which is the CPU of the backup circuit, regardless of the states of the IG1 and IG2 signals. In the following explanation, a signal output from the VCC_INH_B terminal is called a "forced activation signal".

On the other hand, when setting the VCC_INH_M terminal to High, IC2 can maintain an activated state of IC3 (i.e., in which IC3 is operating) regardless of the states of the IG1 and IG2 signals. In this state, power is securely supplied to IC1. In the following explanation, a signal output from the VCC_INH_M terminal is called a "self-holding signal".

That is, three signals such as the IG1 and IG2 signals and the self-holding signal are input into the PINH terminal of IC3, and when any of them is set to High, the main power supply voltage VCCA rises and the main circuit is activated. In other words, when the logical OR of three logical values of the IG1 and IG2 signals and the self-holding signal is High, the main circuit is activated.

Similarly, three signals such as the IG1 and IG2 signals and the forced activation signal are input into the BackUP_EN terminal of IC4, and when any of them is set to High, the backup power supply voltage VCCB rises and the backup circuit is activated. In other words, when the logical OR of three logical values of the IG1 and IG2 signals and the forced activation signal is High, the backup circuit is activated.

Next, an operation when the states of the IG1 and IG2 signals change in accordance with the IG switch switching operation of the driver will be explained. In normal activation in which the driver turns the IG switch on, when the IG1 or IG2 signal is set to High, the PINH terminal of IC 3 and the BackUP_EN terminal of IC4 are set to High, thereby raising both the main power supply voltage VCCA and the backup power supply voltage VCCB.

When the main power supply voltage VCCA rises and IC1 as the CPU of the main circuit is activated, a determination for checking whether the backup circuit is in the normal state is started. In the determination procedure, first, the VCC_INH_B terminal is set to High so as to raise the backup power supply voltage VCCB by the forced activation signal.

When the backup power supply voltage VCCB rises, IC2 as the CPU of the backup circuit is activated. After the backup circuit is activated using the forced activation signal, as described above, IC1 performs a determination with respect to the backup circuit. Simultaneously, IC1 sets the VCC_INH_M terminal to High so as not to set the main power supply voltage VCCA OFF (i.e., Low) even when the driver turns the IG switch off and the IG1 and IG2 signals are set to Low.

When the driver turns the IG switch off, the IG1 and IG2 signals are set to Low. In this process, IC1 monitors the IG1 signal by monitoring the voltage of the ANI1 terminal, and also monitors the IG2 signal by monitoring the voltage of the ANI2 terminal. When the monitored voltages become a predetermined shutdown voltage Vsh or lower, IC1 sets the VCC_INH_B terminal to Low.

When the three signals such as the IG1 and IG2 signals and the forced activation signal at the VCC_INH_B terminal become Low, the signal input into the BackUP_EN terminal of IC4 is set to Low, thereby setting the backup power supply voltage VCCB to OFF. After that, IC1 checks whether the backup power supply voltage VCCB has been normally set to OFF. When it is determined that the backup power supply voltage VCCB has been normally set to OFF, IC1 then sets the VCC_INH_M terminal to Low, and checks by self determination whether the power supply to IC1 is to be normally disconnected.

As discussed above, in the present embodiment, the main circuit and the backup circuit each uses a battery source as the primary source, where the battery source is not directly supplied or disconnected by the IG1 and IG2 signals. Therefore, both circuits can be activated regardless of the states of the IG1 and IG2 signals, thereby allowing cooperation of the main circuit and the backup circuit.

In addition, the backup circuit can be forcibly activated by the main circuit using the forced activation signal; thus, when performing a determination with respect to the backup circuit, the main circuit can reliably activate the backup circuit by setting the forced activation signal to High. Therefore, it is unnecessary to consider a timing for performing the determination, which should be considered in the conventional circuit.

Additionally, even after the driver turns the IG switch off and the IG1 and IG2 signals are set to OFF, it is possible to maintain the activated state of the main circuit by setting the self-holding signal to High. Therefore, even when the IG switch is OFF, the backup circuit can be checked by the main circuit, and thus it is possible to detect a failure in which the activated state of the backup circuit is continued even after the IG switch is turned off.

Furthermore, the main power supply voltage VCCA of the main circuit and the backup power supply voltage VCCB of the backup circuit are each activated when any of the three relevant signals is High; thus, even when parts of the circuit through which one or two of the three signals pass fail, the main circuit and the backup circuit can be activated normally. Therefore, tolerance for failure can be improved in comparison with the conventional redundant power supply circuit.

### Second Embodiment

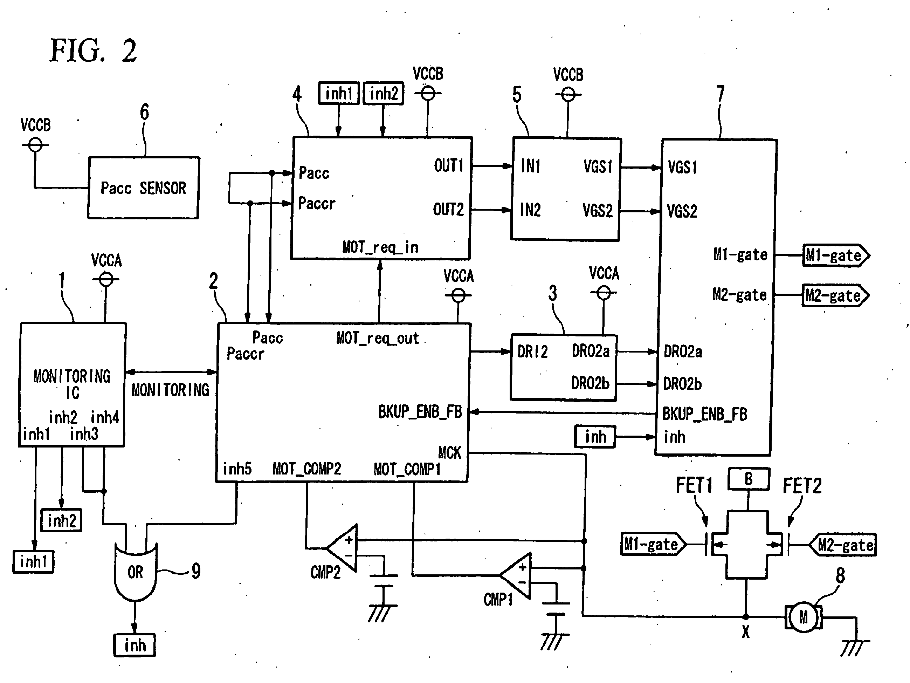

The motor driving circuit as a second embodiment of the present invention will be explained with reference to Figs. 2 to 4.

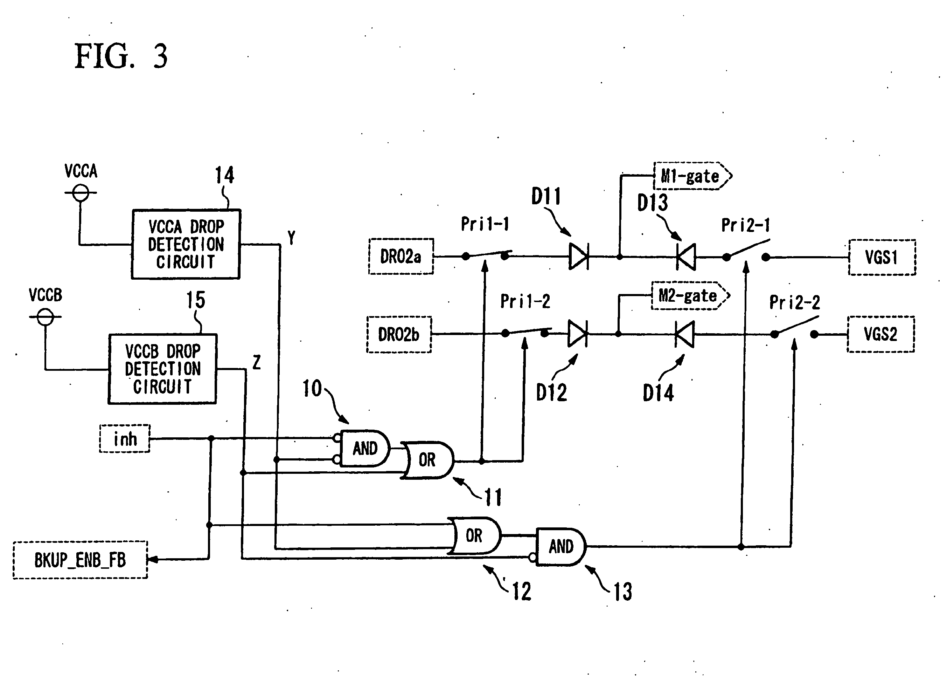

Figs. 2 and 3 are diagrams showing the structure of the motor driving circuit of the second embodiment. Fig. 3 shows the structure of a switching circuit 7 in Fig. 2, and each block indicated by dotted lines in Fig. 3 is connected to a terminal having the same name as that in the switching circuit 7 of Fig. 2.

In Fig. 2, a monitoring IC (integrated circuit) 1 performs a determination with respect to a main CPU 2, and supplies power to the main CPU 2 and a main pre-driver 3. The main CPU 2 performs determinations with respect to the monitoring IC 1 and a backup CPU 4, and commands the main pre-driver 3 to output driving signals.

The main pre-driver 3 receives the command from the main CPU 2 through a DRI2 terminal, and outputs driving signals from DRO2a and DRO2b terminals in accordance with this command. The main pre-driver 3 may independently output each driving signal from the DRO2a and DRO2b terminals, or may simultaneously output the driving signals from these terminals.

The driving signal output from the DRO2a terminal is input via a switch Pril-1 and a diode D11 in Fig. 3 to the gate of a first FET, "FET1" in Fig. 2. On the other hand, the driving signal output from the DRO2b terminal is input via a switch Pril-2 and a diode D12 to the gate of a second FET, "FET2". The switches Pril-1 and Pril-2 are each set to ON when a switching signal input into each switch is High, and set to OFF when the switching signal is Low.

When making a backup pre-driver 5 output driving signals, the main CPU 2 outputs a MOT_req signal from a MOT_req_out terminal. When receiving the MOT_req signal from the main CPU 2 through a MOT_req_in terminal, the backup CPU 4 issues a command, through OUT1 and OUT2 terminals, commanding the backup pre-driver 5 to output driving signals.

The command from the backup CPU 4 is input into the backup pre-driver 5 through IN1 and IN2 terminals, and the backup pre-driver 5 outputs driving signals from VGS1 and VGS2 terminals in accordance with the command.

The driving signal output from the VGS1 terminal is input into the switching circuit 7, and thus input via a switch Pri2-1 and a diode D13 to the gate of FET1 in Fig. 2. On the other hand, the driving signal output from the VGS2 terminal is input via a switch Pri2-2 and a diode D14 to the gate of FET2. The switches Pri2-1 and Pri2-2 are each set to ON when a switching signal input into each switch is High, and set to OFF when the switching signal is Low.

A Pacc sensor 6 is a pressure sensor for outputting a trigger for driving a motor 8. The main CPU 2 and the backup CPU 4 perform (arithmetic) operations based on signals output from the Pacc sensor 6 so as to drive the motor 8.

When the main CPU 2 operates normally, the backup CPU 4 operates based on the MOT_req signal, that is, as the main CPU 2 requested. When the main CPU 2 is in an abnormal state, the backup CPU 4 independently performs an operation based on a signal output from the Pacc sensor 6, so as to drive the motor 8.

The backup CPU 4 does not perform operations other than the operation necessary for driving the motor 8, or the determination with respect to the main CPU 2.

The main CPU 2 monitors the voltage at position X defined on the upstream side of the motor 8, by using three terminals such as an MCK terminal, MOT_COMP1 terminal, and MOT_COMP2 terminal. When FET1 or FET2 is turned on in accordance with input of the above-described driving signals, the voltage at position X becomes High, so that the main CPU 2 can confirm that the motor 8 is energized. On the other hand, when both FET1 and FET2 are turned off, the voltage at position X becomes Low, so that the main CPU 2 can confirm that the motor 8 is not energized.

The MCK terminal of the main CPU 2 is a terminal in which A/D conversion can be executed, and thus the main CPU 2 directly monitors the voltage of the MCK terminal so as to determine whether the voltage is High or Low. With respect to the MOT_COMP1 terminal and the MOT_COMP2 terminal, signals for indicating High or Low (as results of signal level determination) are respectively input into the main CPU 2 via comparators CMP 1 and CMP 2.

When determining whether the voltage at position X is High or Low, if the results of determination based on the signals input into the above three terminals do not coincide with each other, the main CPU 2 compares the number of terminals having the determination result "High" with the number of terminals having the determination result "Low", and adopts the determination result obtained by the larger number of terminals.

For example, in the main CPU 2, if the determination result "High" is obtained from the signals input into the MCK terminal and the MOT_COMP1 terminal, and the determination result "Low" is obtained from the signal input into the MOT_COMP2 terminal, then the determination result "High" is obtained at a larger number of the terminals, and thus it is determined that the voltage at the position X is High and that the motor 8 is energized.

As explained above, three devices are provided for determining whether the motor 8 is normally energized; thus, even when one of these devices is out of order, a determination can be accurately performed, thereby improving the tolerance to failure. Here, the number of determination devices is not limited to three, and an odd number of three or more determination devices can result in similar effects.

In the present embodiment, the main CPU 2 and the backup CPU 4 do not form a complete parallel redundant structure, but rather a switching-type redundant structure using the switching circuit 7; thus, the backup CPU 4 does not need to have all the functions as executed by the main CPU 2, and need only execute those operations at least necessary for driving the motor 8. Therefore, it is unnecessary to use a CPU of high performance as the backup CPU 4.

Next, a procedure for switching to the backup CPU 4 when the main CPU 2 has an abnormal state will be explained.

When the main CPU 2 has an abnormal state, such an abnormality is detected by the monitoring IC 1.

After the abnormality of the main CPU 2 is detected, the monitoring IC 1 sets all inh1 to inh4 terminals to High and outputs High-level signals (i.e., abnormal state signals). When the main CPU 2 is in the normal state, all the nhl to inh4 terminals are set to Low.

The inh1 and inh2 terminals are each connected to the backup CPU 4. When the backup CPU 4 determines that any of the inh1 and inh2 terminals becomes High, the backup CPU 4 performs operations based on the signal output from the Pacc sensor 6, and commands the backup pre-driver 5 to output the driving signals.

That is, two terminals such as the inh1 and inh2 terminals are used for communication from the monitoring IC 1 to the backup CPU 4. Therefore, even when connection relating to one of the terminals is out of order, normal communication can be performed using the other terminal, thereby improving tolerance to failure. Here, the number of terminals used for the communication is not limited to two, and two or more terminals can result in similar effects.

On the other hand, the inh3 and inh4 terminals are each connected to one of input terminals of an OR circuit 9. An inh5 terminal of the main CPU 2 is connected to the other input terminal of the OR circuit 9, and this inh5 terminal is used when the main CPU 2 determines whether the motor 8 can be driven normally by the driving signals from the backup pre-driver 5.

That is, two terminals such as the inh3 and inh4 terminals are used for connecting the monitoring IC 1 to the OR circuit 9. Therefore, even when connection relating to one of the terminals is out of order, the relevant signal can be transmitted normally using the other terminal, thereby improving tolerance to failure. Here, the number of terminals used for the signal transmission is not limited to two, and two or more terminals can result in similar effects.

The signal output from the OR circuit 9 (called an "inh signal") is input into the switching circuit 7, and is sent to input terminals of an AND circuit 10 and an OR circuit 12 in Fig. 3 and also to a BKUP_ENB_FB terminal of the main CPU 2.

The BKUP_ENB_FB terminal is used, for example, in initial checking when the system is activated, so as to confirm whether the inh signal is output normally when the main CPU 2 operates normally. An example of an initial checking process executed by the monitoring IC 1 and the main CPU 2 will be explained.

In the initial checking, first, the main CPU 2 sends the monitoring IC 1a signal indicating that an abnormal state of the main CPU 2 has occurred. When receiving the signal from the main CPU 2, the monitoring IC 1 sets the inh1 to inh4 terminals to High and outputs the High-level signals from these terminals.

Therefore, the inh signal is input via the OR circuit 9 to the switching circuit 7, and also fed back to the BKUP_ ENB_FB terminal. Therefore, when the inh signal is output normally, the main CPU 2 detects the High-level signal at the BKUP_ENB_FB terminal. If the inh signal does not become High due to a failure in the switching circuit 9 or the like, the main CPU 2 can detect an abnormal state at the BKUP_ ENB_FB terminal.

Returning to Fig. 3, while the inh signal is input into one terminal of each of the AND circuit 10 and the OR circuit 12, a signal output from a VCCA drop detection circuit 14 is input into the other terminal of each circuit. The VCCA drop detection circuit 14 outputs (i) a Low-level signal when a power supply voltage VCCA for supplying power to the main CPU 2 and the main pre-driver 3 is normal, and (ii) a High-level signal when the voltage VCCA drops.

The output of the AND circuit 10 is connected to one of input terminals of an OR circuit 11, and a signal output from a VCCB drop detection circuit 15 is input into the other terminal of the OR circuit 11. The output of the OR circuit 12 is connected to one of input terminals of an AND circuit 13, and the signal output from the VCCB drop detection circuit 15 is input into the other terminal of the AND circuit 13.

The VCCB drop detection circuit 15 outputs (i) a Low-level signal when a power supply voltage VCCB for supplying power to the backup CPU 4 and the backup pre-driver 5 is normal, and (ii) a High-level signal when the voltage VCCB drops.

When the voltage VCCB drops, the OR circuit 11 outputs the High-level signal and the AND circuit 13 outputs the Low-level signal regardless of the logical value of the inh signal, and thus the switches Pri1-1 and Pri1-2 are turned on, while the switches Pri2-1 and Pri2-2 are turned off. That is, when the voltage VCCB drops, the driving signals from the main pre-driver 3 are forcibly selected and output to FET1 and FET2.

Similarly, when the voltage VCCA drops, the AND circuit 10 outputs the Low-level signal and the OR circuit 12 outputs the High-level signal regardless of the logical value of the inh signal. Therefore, if the power supply voltage VCCB is normal, the OR circuit 11 outputs the Low-level signal and the AND circuit 13 outputs the High-level signal, and thus the switches Pril-1 and Pril-2 are turned off, while the switches Pri2-1 and Pri2-2 are turned on. That is, when the voltage VCCA drops, the driving signals from the backup pre-driver 3 are forcibly selected and output to FET1 and FET2.

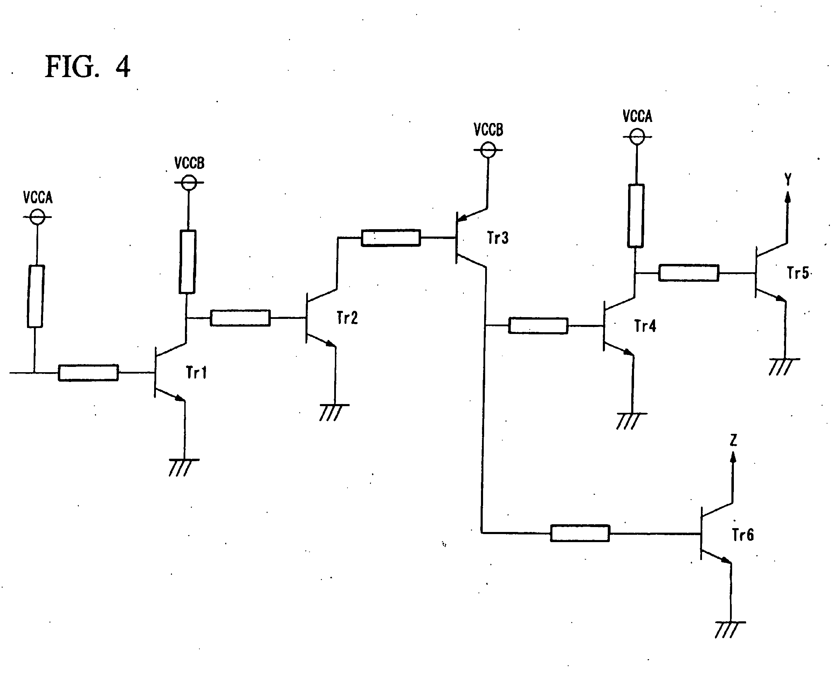

Fig. 4 is a diagram showing an example of the structure of the VCCA drop detection circuit 14 and the VCCB drop detection circuit 15. In Fig. 4, when the power supply voltage VCCA drops, transistors Tr2, Tr3, and Tr6 are turned on, while a transistor Tr5 is turned off, so that the voltage at position Y in Fig. 4 becomes High. The voltage at the position Y forms an output signal from the VCCA drop detection circuit 14 in Fig. 3.

On the other hand, when the power supply voltage VCCB drops, a transistor Tr5 is turned on while the transistor Tr6 is turned off, so that the voltage at position Z in Fig. 4 becomes High. The voltage at the position Z forms an output signal from the VCCB drop detection circuit 15 in Fig. 3.

Accordingly, dropping of the power supply voltage VCCA or the power supply voltage VCCB is detected and the states of the switches Pril-1, Pril-2, Pri2-1, and Pri2-2 are set in accordance with the results of detection. Therefore, it is possible to select any circuit having a normal power supply voltage from among the main pre-driver 3 and the backup pre-driver 5, and to always output normal driving signals to FET1 and FET2.

### Third Embodiment

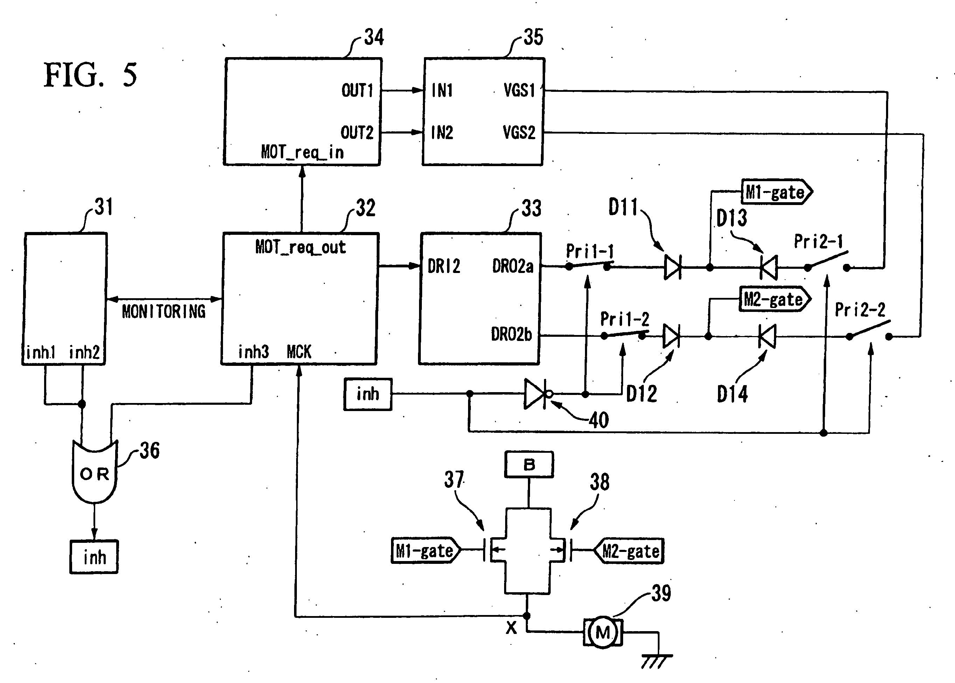

The motor driving circuit as a third embodiment of the present invention will be explained with reference to Figs. 5 to 7.

Fig. 5 is a block diagram showing the structure of the motor driving circuit of the third embodiment. The first control circuit of the present invention corresponds to a main CPU 32 and a main pre-driver 33 in Fig. 5, and the second control circuit of the present invention corresponds to a backup CPU 34 and a backup pre-driver 35 in Fig. 5.

In Fig. 5, a monitoring IC 31 performs a determination with respect to the main CPU 32, and supplies power to the main CPU 32 and the main pre-driver 33. The main CPU 32 performs a determination with respect to the monitoring IC 31, and commands the main pre-driver 33 to output driving signals. The main pre-driver 33 receives the command from the main CPU 32 through a DRI2 terminal, and outputs driving signals from DRO2a and DRO2b terminals in accordance with this command. The main pre-driver 33 may independently output each driving signal from the DRO2a and DRO2b terminals, or may simultaneously output the driving signals from these terminals.

The driving signal output from the DRO2a terminal is input via a switch Pril-1 and a diode D11 to the gate of a final-stage FET 37. On the other hand, the driving signal output from the DRO2b terminal is input via a switch Pril-2 and a diode D12 to the gate of another final-stage FET 38.

When making the backup pre-driver 35 output driving signals, the main CPU 32 outputs a MOT_req signal from a MOT_req_out terminal. When receiving the MOT_req signal from the main CPU 32 through a MOT_req_in terminal, the backup CPU 34 issues a command, through OUT1 and OUT2 terminals, commanding the backup pre-driver 35 to output driving signals.

The command from the backup CPU 34 is input into the backup pre-driver 35 through IN1 and IN2 terminals, and the backup pre-driver 35 outputs driving signals from VGS1 and VGS2 terminals in accordance with the command.

The driving signal output from the VGS1 terminal is input via a switch Pri2-1 and a diode D13 to the gate of the final-stage FET 37. On the other hand, the driving signal output from the VGS2 terminal is input via a switch Pri2-2 and a diode D14 to the gate of the final-stage FET 38.

The main CPU 32 monitors the voltage at position X in Fig. 5 by using an MCK terminal (i.e., an energization determining device).

When the FET 37 or 38 is turned on in accordance with input of the above-described driving signals, the voltage at position X becomes High, so that the main CPU 32 can confirm that the motor 39 is energized. On the other hand, when both the FETs 37 and 38 are turned off, the voltage at position X becomes Low, so that the main CPU 32 can confirm that the motor 39 is not energized.

Next, a switching process between the switches Pril-1, Pril-2, Pri2-1, and pri2-2 will be explained.

One of two input terminals of an OR circuit 36 is connected to inh1 and inh2 terminals of the monitoring IC 31, and the other input terminal is connected to an inh3 terminal of the main CPU 32.

When the monitoring IC 31 determines that the main CPU 32 does not operate normally, the monitoring IC 31 sets the inh1 and inh2 terminals High and outputs High-level signals. That is, two terminals such as the inh1 and inh2 terminals are used; thus, even when any one of the terminals is disconnected from the OR circuit 36, the relevant signal can be input normally into the OR circuit 36 through the other terminal.

In addition, when the driving signals from the backup pre-driver 35 should be selected, the main CPU 32 sets the inh3 terminal to High and outputs a High-level signal (below, the signal output from the inh3 terminal is called a "pseudo inh signal"). When any of the signals from the inh1, inh2, and inh3 terminal is High, the OR circuit 36 outputs a High-level signal, and outputs a Low-level signal when all the above three terminals output Low-level signals.

The signal output from the OR circuit 36 (called an "inh signal") is split into two portions: one functions as the switching signal for switching the switches Pril-1 and Pri1-2 via a NOT circuit 40, and the other functions as the switching signal for switching the switches Pri2-1 and Pri2-2.

The switches Pri1-1, Pri1-2, Pri2-1, and pri2-2 are each turned on when the relevant switching signal is High, and turned off when the switching signal is Low.

Therefore, when the inh signal is Low, the switches Pril-1 and Pril-2 are ON while the switches Pri2-1 and pri2-2 are OFF, so that the driving signals from the main pre-driver 33 are selected and output to the FETs 37 and 38.

On the other hand, when the inh signal is High, the switches Pri1-1 and Pri1-2 are OFF while the switches Pri2-1 and pri2-2 are ON, so that the driving signals from the backup pre-driver 35 are selected and output to the FETs 37 and 38.

That is, through the above four switches, when any one of the inh1, inh2, and inh3 terminals is High, the driving signals from the backup pre-driver 35 are selected, and only when all the terminals are Low, are the driving signals from the main pre-driver 33 selected.

Below, a determination test performed before starting the driving control of the motor 39 will be explained with reference to a timing chart of Fig. 6. In the present embodiment, before starting the driving control of the motor 39, the main CPU 32 energizes the motor 39 for a short period of time, so as to check the motor driving circuit.

In Fig. 6, parts (1) and (2) indicate respective logical values at the VGS1 and VGS terminals as the output terminals of the backup pre-driver 35, and parts (3) and (4) indicate respective logical values at the DRO2a and DRO2b terminals as the output terminals of the main pre-driver 33.

In addition, part (5) indicates the logical value of the pseudo inh signal output from the inh3 terminal of the main CPU 32, and part (6) indicates an expectation (i.e., a mathematical expectation value or an expected value) at the MCK terminal when each relevant terminal is in the state shown in parts (1) to (5) and the motor driving circuit shown in Fig. 5 operates normally.

In the time period of ON test 1 in Fig. 6, signals from both outputs of the backup pre-driver 35 are High, signals from both outputs of the main pre-driver 33 are Low, and the pseudo inh signal is High, so that the outputs of the backup pre-driver 35 are selected. In this case, if the route from the backup pre-driver 35 to the FETs 37 and 38 is in the normal state, a High-level signal is detected at the MCK terminal.

In the time period of ON test 2, both output terminals of the backup pre-driver 35 and the DRO2b terminal of the main pre-driver 33 are Low, the DRO2a terminal of the main pre-driver 33 is High, and the pseudo inh signal is Low, so that the outputs of the main pre-driver 33 are selected. In this case, if the route from the DRO2a terminal of the main pre-driver 33 to the FET 37 is in the normal state, a High-level signal is detected at the MCK terminal.

In the time period of ON test 3, both output terminals of the backup pre-driver 35 and the DRO2a terminal of the main pre-driver 33 are Low, the DRO2b terminal of the main pre-driver 33 is High, and the pseudo inh signal is Low, so that the outputs of the main pre-driver 33 are selected. In this case, if the route from the DRO2b terminal of the main pre-driver 33 to the FET 38 is in the normal state, a High-level signal is detected at the MCK terminal.

That is, when the result of ON test 1 coincides with the relevant expectation shown in part (6), it can be determined that at least one of the routes from the backup pre-driver 35 to the FET 37 or to the FET 38 is in the normal state. Similarly, when the result of ON test 2 coincides with the relevant expectation, it can be determined that the route from the DRO2a terminal of the main pre-driver 33 to the FET 37 is in the normal state. Also similarly, when the result of ON test 3 coincides with the relevant expectation, it can be determined that the route from the DRO2b terminal of the main pre-driver 33 to the FET 38 is in the normal state.

In Fig. 6, parts (7) to (10) show logical values at the MCK terminal when an abnormal state is detected in any of ON tests 1 to 3.

In the pattern shown in part (7), only the result of ON test 1 differs from the expectation obtained in the normal state. Therefore, it is determined that there is a failure in the route from the backup pre-driver 35 to the FETs 37 and 38.

In this case, when the motor is driven after the present determination, the main CPU 32 sets the pseudo inh signal to Low, and drives the FETs 37 and 38 by PWM (pulse width modulation) chopping by using the DRO2a and DRO2b terminals of the main pre-driver 33.

In the pattern shown in part (8), only the result of ON test 2 differs from the expectation obtained in the normal state. Therefore, it is determined that there is a failure in the route from the DRO2a terminal of the main pre-driver 33 to the FET 37.

In this case, when the motor is driven after the present determination, the main CPU 32 sets the pseudo inh signal to Low, and drives the FET 38 by using only the DRO2b terminal of the main pre-driver 33. Therefore, different from the case with respect to the part (7), the motor 39 is driven using a single FET 38. In the above chopping method, ON/OFF switching is frequently performed and thus the thermal condition is severe. Therefore, in the present case, instead of chopping, a linear driving method using DC (direct current) is employed.

In the pattern shown in part (9), only the result of ON test 3 differs from the expectation obtained in the normal state. Therefore, it is determined that there is a failure in the route from the DRO2b terminal of the main pre-driver 33 to the FET 38.

In this case, when the motor is driven after the present determination, the main CPU 32 sets the pseudo inh signal to Low, and drives the FET 37 by the linear driving method by using only the DRO2a terminal of the main pre-driver 33.

In the pattern shown in part (10), the results of ON tests 2 and 3 differ from the corresponding expectations obtained in the normal state. Therefore, it is determined that there is a failure in the route from the main pre-driver 33 to the FETs 37 and 38.

In this case, when the motor is driven after the present determination, the main CPU 32 sets the pseudo inh signal to High, and drives the FETs 37 and 38 by using the VGS1 and VGS2 terminals of the backup pre-driver 35.

Here, it cannot be determined by only using the result of ON test 1 whether both routes from the VGS1 and VGS2 terminals are in the normal state. Therefore, the present case employs a linear driving method by which the motor 39 can be reliably driven even with any one of the FETs 37 and 38.

As described above, the determination using ON tests 1 to 3 is performed before the motor 39 is driven. Therefore, even if a failure occurs in some of the circuits for driving the two final-stage FETs 37 and 38, a route for driving the motor 39 normally can be appropriately selected. Accordingly, it is possible to provide a motor driving circuit of high reliability without employing a redundant structure for the final-stage FETs.

Next, a determination test performed after the driving control of the motor 39 is terminated will be explained with reference to the timing chart in Fig. 7. The present embodiment performs a test for checking whether the motor 39 is continuously energized while the driving control of the motor 39 is stopped.

In Fig. 7, parts (1) and (2) indicate respective logical values at theRO2a and DRO2b terminals as the output terminals of the main pre-driver 33, and parts (3) and (4) indicate respective logical values at the VGS1 and VGS terminals as the output terminals of the backup pre-driver 35.

In addition, part (5) indicates the logical value of the pseudo inh signal output from the inh3 terminal of the main CPU 32, and part (6) indicates an expectation (i.e., a mathematical expectation value or an expected value) at the MCK terminal when each relevant terminal is in the state shown in parts (1) to (5) and the motor driving circuit shown in Fig. 5 operates normally.

In the time period of OFF test 1 in Fig. 7, signals from both outputs of the main pre-driver 33 are Low, signals from both outputs of the backup pre-driver 35 are Low, and the pseudo inh signal is Low, so that the outputs of the main pre-driver 33 are selected. In this case, if the route from the main pre-driver 33 to the FETs 37 and 38 is in the normal state, a Low-level signal is detected at the MCK terminal.

In the time period of OFF test 2, signals from both outputs of the main pre-driver 33 are Low, signals from both outputs of the backup pre-driver 35 are Low, and the pseudo inh signal is High, so that the outputs of the backup pre-driver 35 are selected. In this case, if the route from the backup pre-driver 35 to the FETs 37 and 38 is in the normal state, a Low-level signal is detected at the MCK terminal.

In the time period of OFF test 3, signals from both outputs of the main pre-driver 33 are Low, signals from both outputs of the backup pre-driver 35 are High, and the pseudo inh signal is Low, so that the outputs of the main pre-driver 33 are selected. In this case, if the route from the main pre-driver 33 to the FETs 37 and 38 is in the normal state, a Low-level signal is detected at the MCK terminal.

In the time period of OFF test 4, signals from both outputs of the main pre-driver 33 are High, signals from both outputs of the backup pre-driver 35 are Low, and the pseudo inh signal is High, so that the outputs of the backup pre-driver 35 are selected. In this case, if the route from the backup pre-driver 35 to the FETs 37 and 38 is in the normal state, a Low-level signal is detected at the MCK terminal.

In Fig. 7, parts (7) to (10) show logical values at the MCK terminal when an abnormal state is detected in any of OFF tests 1 to 4.

In the pattern shown in part (7), only the result of OFF test 1 coincides with the expectation obtained in the normal state. In this case, after the determination, the motor is stopped while each relevant section in the motor driving circuit is set to the state defined in OFF test 1 by the main CPU 32.

In the pattern shown in part (8), only the result of OFF test 2 coincides with the expectation obtained in the normal state. In this case, after the determination, the motor is stopped while each relevant section is set by the main CPU 32 to the state defined in OFF test 2.

In the pattern shown in part (9), only the result of OFF test 3 coincides with the expectation obtained in the normal state. In this case, after the determination, the motor is stopped while each relevant section is set by the main CPU 32 to the state defined in OFF test 3.

In the pattern shown in part (10), only the result of OFF test 4 coincides with the expectation obtained in the normal state. In this case, after the determination, the motor is stopped while each relevant section is set by the main CPU 32 to the state defined in OFF test 4.

When an abnormal state is detected through OFF tests 1 to 4, if the results of a plurality of OFF tests coincide with the corresponding expectations, then after the determination, the motor can be stopped while each relevant section is set by the main CPU 32 to the state defined in any of these OFF tests.

As explained above, while driving of the motor is stopped, the main CPU 32 tests the motor driving circuit, and selects the conditions which have been determined as normal in accordance with OFF tests 1 to 4. Therefore, even if a failure occurs in some of the circuits for driving the final-stage FETs 37 and 38, the FETs 37 and 38 can be continuously OFF, thereby preventing the motor 39 from being continuously energized.

As described above, in the present embodiment, the motor driving circuit for driving the motor has a redundant structure, and an optimum route (or circuit) can be selected before the motor is driven. In addition, when the motor is stopped, the state in which the energization of the motor is reliably stopped can be selected.

Therefore, it is possible to provide a motor driving circuit having high reliability at low cost, without employing a completely parallel redundant structure in which the final-stage FETs are also redundant, as in the conventional technique. In addition, it is possible to prevent dark current from continuously flowing from the battery while the motor is stopped, which may cause the battery to die.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### Industrial Applicability

The present invention is preferably applied to a motor driving circuit having a redundant structure, used in a computer unit of a vehicle electronic control system, or a redundant power supply circuit of the vehicle electronic control system.

## Claims

1. A motor driving circuit comprising:
a main driving circuit (2, 3) for outputting a driving signal for driving a motor, wherein the main driving circuit has a determination device (2) for determining whether the motor is normally energized;
a main monitoring circuit (1) for determining a failure in the main driving circuit and outputting an abnormal state signal when determining that there is a failure in the main driving circuit;
a backup driving circuit (4, 5) for outputting a driving signal for driving the motor when receiving the abnormal state signal; and
a switching circuit (7) for selecting one of the main driving circuit and the backup driving circuit based on the abnormal state signal, and outputting the driving signal,
which is output from the selected driving circuit, to the motor;
**characterized in that** the main driving circuit has:
a CPU (2) for performing determinations with respect to both the main monitoring circuit and a backup CPU (4) that forms part of the backup driving circuit, wherein
when the backup driving circuit does not receive the abnormal state signal, the backup driving circuit operates based on an operation designating signal input from the main driving circuit; and wherein
the backup CPU does not perform operations other than the operation necessary for driving the motor, or determination with respect to the main driving circuit.

2. The motor driving circuit in accordance with claim 1, having a plurality of signal lines for outputting the abnormal state signal from the main monitoring circuit to the backup driving circuit.

3. The motor driving circuit in accordance with claim 1, wherein the switching circuit selects one of the main driving circuit and the backup driving circuit based on a logical OR of the abnormal state signal and a switching signal supplied from the main driving circuit.

4. The motor driving circuit in accordance with claim 1, further comprising:
a main power supply voltage-drop detecting device (14) for detecting a voltage drop in a power supply of the main driving circuit, wherein
the switching circuit forcibly selects the backup driving circuit when the voltage drop is detected by the main power supply voltage-drop detecting device.

5. The motor driving circuit in accordance with claim 1, further comprising:
a backup power supply voltage-drop detecting device (15) for detecting a voltage drop in a power supply of the backup driving circuit, wherein
the switching circuit forcibly selects the main driving circuit when the voltage drop is detected by the backup power supply voltage-drop detecting device.

6. The motor driving circuit in accordance with claim 1, wherein the switching circuit receives the abnormal state signal and outputs the received abnormal state signal to the main driving circuit.

7. The motor driving circuit in accordance with claim 1, comprising:
an odd number of three or more of the determination devices, wherein
whether the main driving circuit or the backup driving circuit drives the motor normally is determined based on a result of a determination obtained by a larger number of the determination devices.

## Patentansprüche

1. Motoransteuerschaltung, umfassend:
eine Hauptansteuerschaltung (2, 3), die ein Ansteuersignal zum Ansteuern eines Motors ausgibt, wobei die Hauptansteuerschaltung eine Feststellvorrichtung (2) besitzt, die feststellt, ob der Motor normal mit Energie versorgt wird;
eine Hauptüberwachungsschaltung (1), die einen Fehler in der Hauptansteuerschaltung feststellt und ein Fehlerstatussignal ausgibt, wenn sie feststellt, dass in der Hauptansteuerschaltung eine Störung vorliegt;
eine Reserveansteuerschaltung (4, 5), die ein Ansteuersignal zum Ansteuern des Motors ausgibt, wenn sie das Fehlerstatussignal empfängt; und
eine Auswahlschaltung (7), die abhängig von dem Fehlerstatussignal entweder die Hauptansteuerschaltung oder die Reserveansteuerschaltung wählt, und an den Motor das Ansteuersignal ausgibt, das die gewählte Ansteuerschaltung abgibt, **dadurch gekennzeichnet, dass** die Hauptansteuerschaltung umfasst:
eine CPU (2), die Feststellungen bezüglich der Hauptüberwachungsschaltung und einer Reserve-CPU (4) trifft, die einen Teil der Reserveansteuerschaltung bildet, wobei
wenn die Reserveansteuerschaltung das Fehlerstatussignal nicht empfängt, die Reserveansteuerschaltung gestützt auf ein Operationsbezeichnungssignal arbeitet, das von der Hauptansteuerschaltung eingegeben wird, und
die Reserve-CPU keine weiteren Operationen ausführt als die Operation, die zum Ansteuern des Motors nötig ist, und keine Feststellung bezüglich der Hauptansteuerschaltung.

2. Motoransteuerschaltung nach Anspruch 1, umfassend eine Anzahl Signalleitungen für die Ausgabe des Fehlerstatussignals von der Hauptüberwachungsschaltung an die Reserveansteuerschaltung.

3. Motoransteuerschaltung nach Anspruch 1, wobei die Auswahlschaltung entweder die Hauptansteuerschaltung oder die Reserveansteuerschaltung wählt, und zwar abhängig von einer logischen ODER-Verknüpfung des Fehlerstatussignals mit einem Auswahlsignal, das die Hauptansteuerschaltung liefert.

4. Motoransteuerschaltung nach Anspruch 1, ferner umfassend:
eine Spannungsabfall-Erfassungsvorrichtung (14) für die Hauptstromversorgung, die einen Spannungsabfall in der Stromversorgung der Hauptansteuerschaltung erfasst, wobei
die Auswahlschaltung zwingend die Reserveansteuerschaltung wählt, wenn die Spannungsabfall-Erfassungsvorrichtung für die Hauptstromversorgung einen Spannungsabfall erkennt.

5. Motoransteuerschaltung nach Anspruch 1, weiterhin umfassend:
eine Spannungsabfall-Erfassungsvorrichtung (15) für die Reservestromversorgung, die einen Spannungsabfall in der Stromversorgung der Reserveansteuerschaltung erfasst, wobei
die Auswahlschaltung zwingend die Hauptansteuerschaltung wählt, wenn die Spannungsabfall-Erfassungsvorrichtung für die Reservestromversorgung einen Spannungsabfall erkennt.

6. Motoransteuerschaltung nach Anspruch 1, wobei die Auswahlschaltung das Fehlerstatussignal empfängt und das empfangene Fehlerstatussignal an die Hauptansteuerschaltung ausgibt.

7. Motoransteuerschaltung nach Anspruch 1, umfassend:
eine ungerade Anzahl von drei oder mehr Feststellvorrichtungen, wobei
die Feststellung, ob die Hauptansteuerschaltung oder die Reserveansteuerschaltung den Motor normal ansteuert, abhängig von dem Feststellungsergebnis getroffen wird, das von der größeren Anzahl der Feststellvorrichtungen erhalten wird.

## Revendications

1. Circuit d'entraînement de moteur, comprenant :
un circuit d'entraînement principal (2, 3) pour émettre un signal d'entraînement pour l'entraînement d'un moteur, où le circuit d'entraînement principal possède un dispositif de détermination (2) pour déterminer si le moteur est normalement excité ;
un circuit de surveillance principal (1) pour déterminer une défaillance dans le circuit d'entraînement principal et pour émettre un signal d'état anormal lorsqu'il est établi qu'il y a une défaillance dans le circuit d'entraînement principal ;
un circuit d'entraînement de secours (4, 5) pour émettre un signal d'entraînement pour l'entraînement du moteur lors de la réception du signal d'état anormal ; et
un circuit de commutation (7) pour sélectionner un parmi le circuit d'entraînement principal et le circuit d'entraînement de secours sur la base du signal d'état anormal, et émettre le signal d'entraînement qui est émis par le circuit d'entraînement sélectionné, au moteur ;
**caractérisé en ce que** le circuit d'entraînement principal comporte :
une CPU (2) pour exécuter des déterminations à la fois relativement au circuit de surveillance principal et à une CPU de secours (4) qui fait partie du circuit *d'entraînement de secours, où
lorsque le circuit d'entraînement de secours ne reçoit pas le signal d'état anormal, le circuit d'entraînement de secours fonctionne sur la base d'un signal de désignation d'opération entrée par le circuit d'entraînement principal ; et où
la CPU de secours n'exécute pas d'opérations autres que l'opération nécessaire pour l'entraînement du moteur, ou la détermination relativement au circuit d'entraînement principal.

2. Circuit d'entraînement de moteur selon la revendication 1, comportant une pluralité de lignes de signaux pour émettre le signal d'état anormal du circuit de surveillance principal au circuit d'entraînement de secours.

3. Circuit d'entraînement de moteur selon la revendication 1, où le circuit de commutation sélectionne un parmi le circuit d'entraînement principal et le circuit d'entraînement de secours sur la base d'une OR logique du signal d'état anormal et d'un signal de commutation fourni par le circuit d'entraînement principal.

4. Circuit d'entraînement de moteur selon la revendication 1, comprenant en outre :
un dispositif de détection (14) de chute de tension dans l'alimentation principale pour détecter une chute de tension dans une alimentation en puissance du circuit d'entraînement principal, où
le circuit de commutation est forcé de sélectionner le circuit d'entraînement de secours lorsque la chute de tension est détectée par le dispositif de détection de la chute de tension dans l'alimentation en puissance principale.

5. Circuit d'entraînement de moteur selon la revendication 1, comprenant en outre :
un dispositif de détection (15) de la chute de tension dans l'alimentation en puissance de secours pour détecter une chute de tension dans une alimentation en puissance du circuit d'entraînement de secours, où
le circuit de commutation est forcé de sélectionner le circuit d'entraînement principal lorsque la chute de tension est détectée par le dispositif de détection de la chute de tension dans l'alimentation en puissance de secours.

6. Circuit d'entraînement de moteur selon la revendication 1, où le circuit de commutation reçoit le signal d'état anormal et émet le signal d'état anormal reçu au circuit d'entraînement principal.

7. Circuit d'entraînement de moteur selon la revendication 1, comprenant :
un nombre impair de trois ou plusieurs des dispositifs de détermination, dans lequel
le fait de savoir si le circuit d'entraînement principal ou le circuit d'entraînement de secours entraîne le moteur normalement est déterminé sur la base d'un résultat d'une détermination obtenue par un plus grand nombre de dispositifs de détermination.
